# EUROPEAN PATENT APPLICATION

(11) **EP 1 229 479 A2**
(43) Date of publication of application: **07.08.2002**
(21) Application number: 02250598.6
(22) Date of filing: 29.01.2002
(51) Int. Cl.: G06F 17/60

(54) **Presentation system for compression train configuration information**

(30) Priority: 01.02.2001 US 776238
(71) Applicant: Nuovo Pignone Holding S.P.A., 50127 Florence (IT)
(72) Inventor: Lanfredi, Stefano, Florence (IT); Castaldi, Andrea, Florence (IT); Quaranta, Christina, Florence (IT)
(74) Representative: Pedder, James Cuthbert

(57) **Abstract**

A method and system for collecting operating conditions of a compression train from the potential purchaser, for presenting a compression train that satisfies those operating conditions, and for receiving a request for quotation for the presented compression train. The presentation system is implemented using a client/server architecture. The server system provides to the client systems display pages of compression train-related information. These display pages allow users of the client systems to input desired operating conditions of the compression train. When the server system receives these operating conditions from client systems, it provides these operating conditions to a calculation engine to identify a compression train that satisfies the operating conditions. The identified compression train includes the identification of the driver target, gearbox, and one or more compression casings along with various characteristics of the configuration such as discharge pressure, discharge temperature, and number of stages.

## Description

The described technology generally relates to a user interface for accessing compression train configuration information.

It has traditionally been both time-consuming and expensive for purchasers of compression trains to identify the appropriate configuration for their power plants. These purchasers typically send their technical data in the form of a request for proposal via facsimile or electronic mail to a local sales representative of a seller of compression trains. This local sales representative in turn forwards that technical data to engineers who perform the technical selection of the configuration, prepare a detailed proposal, and forward the proposal to the local sales representative. The local sales representative then presents the proposal to the potential purchaser. The process from the receipt of a request for proposal by a local sales representative to the selecting and presenting of the proposal to the potential purchaser can take several weeks.

This process can take even longer when the technical data that is received from a potential purchaser is missing certain important data without which a selection cannot be made. In addition, the technical data supplied by the potential purchaser may be internally inconsistent and thus needs to be clarified before a proposal can be prepared. As a result, the engineers often need to ask the local sales representative to collect additional information from the potential purchaser, which further delays the selecting and presenting of the proposal.

Any delay in the selecting and presenting of a proposal is problematic. The first seller who provides a proposal for a project may have a competitive advantage over other sellers who provide their proposals a week or two later. Also, the potential purchaser's requirements may change frequently when the feasibility of the project is being evaluated. A seller who can rapidly respond to these changes in requirements will have an advantage over sellers who cannot.

It would be desirable to have a system that would allow potential purchasers to easily identify configurations of compression trains which will satisfy the operating conditions of their project, specify the scope of supply for the purchase of that configuration, and request a quotation for the purchase of the compression train with the specified scope of supply.

The invention will now be described in greater detail, by way of example, with reference to the drawings, in which:-
Figure 1 illustrates the initial display page of the presentation system.
Figure 2 illustrates a display page with the list of currently defined projects for a user.
Figure 3 illustrates a display page with a list of configuration data sets for a project.
Figure 4 illustrates a display page for the results of a configuration data set when a request for quotation has already been sent to a seller.
Figure 5 illustrates a display page for the results of the configuration data set when a request for quotation has not been sent to a seller.
Figure 6 illustrates a display page for input of general data for a configuration data set.
Figure 7 illustrates the a display page for input of compression data for configuration data set.
Figure 8 illustrates a display page for input of fuel gas composition information.
Figure 9 illustrates a display page for input of processed gas composition information.
Figure 10 illustrates a display page for output of the configuration results.
Figure 11 illustrates a display page that display is more detailed configuration results data.
Figure 12 illustrates a display page for saving the configuration data set.
Figure 13 illustrates a display page for entry of general data for a new RFC&Q.
Figure 14 illustrates a display page for entry of compression related data for a new RFC&Q data set.
Figure 15 illustrates a display page showing summary data before saving the RFC&Q data.
Figure 16 illustrates a display page showing summary data after saving the RFC&Q data.
Figure 17 illustrates a display page showing the RFC&Q data that has been defined.
Figure 18 illustrates a display page with summary data for an RFC&Q for which no RFQ has been submitted.
Figure 19 illustrates a display page that lists verifications for RFC&Q data.
Figure 20 illustrates a display page for entry of a new verification.
Figure 21 illustrates a display page for entry of compression related verification data.
Figure 22 illustrates a display page for showing summary data for a verification.
Figure 23 illustrates a display page for specifying a layout design.
Figure 24 illustrates a display page for displaying the graphics of a layout.
Figure 25 illustrates a display page for an RFQ checklist for a compressor without the driver.
Figure 26 illustrates a display page for entry of an RFQ checklist with an electric motor.
Figure 27 illustrates a display page for entry of an RFQ checklist with a turbocompressor.
Figure 28 illustrates a display page for submitting an RFQ.
Figure 29 is a block diagram illustrating the components of the presentation system in one embodiment.
Figure 30 is a flow diagram illustrating the processing of the list of projects component in one embodiment.
Figure 31 is a flow diagram illustrating the processing of the new configuration component in one embodiment.
Figure 32 is a flow diagram illustrating the processing of the new RFC&Q component in one embodiment.
Figure 33 is a flow diagram of the list of RFC&Qs component in one embodiment.
Figure 34 is a flow diagram of the list of verifications component. In block 3401, the component retrieves the list of verifications for the user and displays and that list.
Figure 35 is a flow diagram illustrating the processing of the layout design component in one embodiment.

A method and system for collecting operating conditions of a compression train from the potential purchaser, for presenting a compression train that satisfies those operating conditions, and for receiving a request for quotation for the presented compression train is provided. In one embodiment, the presentation system is implemented using a client/server architecture. The client systems are computers that may be located at the site of potential purchasers, and the server system is a computer that may be under the control of the seller. The server system provides to the client systems display pages of compression train-related information. These display pages allow users of the client systems to input desired operating conditions of the compression train. When the server system receives these operating conditions from client systems, it provides these operating conditions to a calculation engine to identify a compression train that satisfies the operating conditions. The identified compression train includes the identification of the driver target, gearbox, and one or more compression casings along with various characteristics of the configuration such as discharge pressure, discharge temperature, and number of stages. The presentation system allows the user to submit requests for quotations to the seller for the identified compression train. If the calculation engine cannot identify a compression train that satisfies the operating characteristics, then the presentation system allows the user to submit the operating conditions (e.g., a configuration data set) to the seller so that the seller can manually identify a compression train that satisfies the operating conditions. The presentation system allows the user to define projects which can group alternative configuration data sets for a compression train. The presentation system also allows the user to specify verification data, which can verify the selected compressor train. In this way, the presentation system allows a potential purchaser to quickly determine whether the seller has a compression train that satisfies the requirements and to submit a request for proposal at that time. Also, the presentation system ensures that sufficient information to prepare a proposal is collected initially and thus, avoids the delays associated with receiving incomplete or inconsistent data.

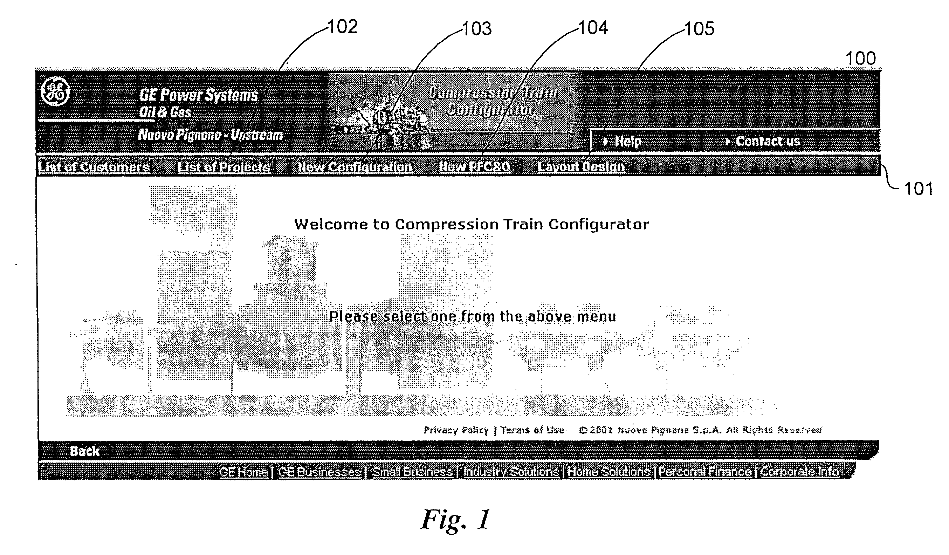

Figures 1-28 illustrate display pages of the presentation system in one embodiment. Figure 1 illustrates the initial display page of the presentation system. The presentation system displays the initial display page after a user has logged on to the presentation system. The display page 100 includes menubar 101 with the menu items of list of projects 102, new configuration 103, new RFC&Q 104, and layout design 105. The list of projects menu item displays display pages related to currently defined projects and the configuration data sets within each project. The new configuration menu item allows a user to define a new configuration data set. The new RFC&Q menu item allows a user to define and submit a request for configuration and quotation to the seller of the compression train. The layout design menu item allows a user to design a layout for a proposed compression train and then view that layout.

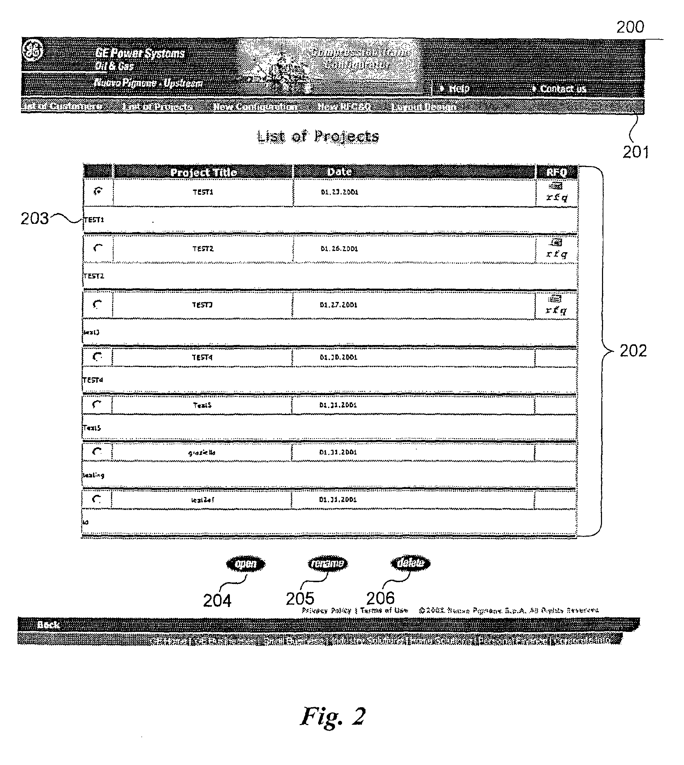

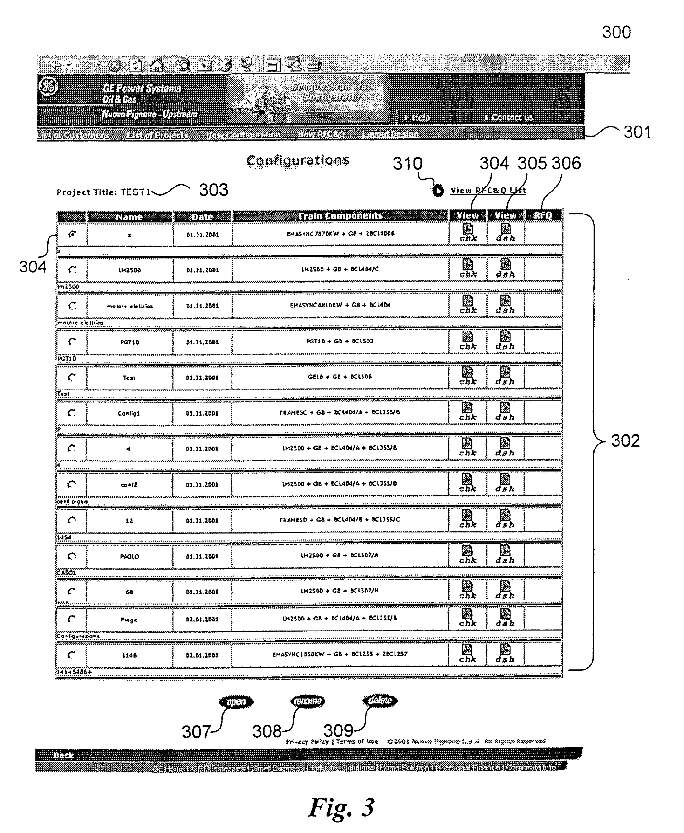

Figures 2-5 illustrate the display pages related to the list of projects menu item. Figure 2 illustrates a display page with the list of currently defined projects for a user. Display page 200 includes menubar 201 and list of projects 202. Each project 203 includes a title, date, project description, rfq icon and selection radio button. The rfq icon indicates whether a request for quote has been sent. The selection radio button is used to select a project for further processing. The date indicates the day in which the project was created. The open button 204 is used to open a selected project. The rename button 205 and the delete button 206 are used to rename and delete the selected project. Figure 3 illustrates a display page with a list of configuration data sets for a project. Display page 300 is displayed when the open button 204 is selected. Display page 300 includes menubar 301, configuration data set listing 302, and project title 303. The configuration data set listing contains entry 304 for each configuration data set that is defined for the project. Each configuration data set entry includes a selection radio button, a configuration name, a creation date, an indication of the proposed composition of the compression train, a checklist button 304, a data sheet button 305, and request for quote button 306. The checklist button is used to display the checklist associated with the configuration data set. The checklist includes additional information needed to specify the scope of a request for quotation. The data sheet includes data for the proposed configuration. The request for quote button is used to submit a request for quotation based on the configuration data. The date field associated with the request for quotation indicates the date in which a request was submitted to the seller. The open button 307 is used to open the selected configuration data set. The rename button 308 and the delete button 309 are used to rename and delete the selected configuration data set.

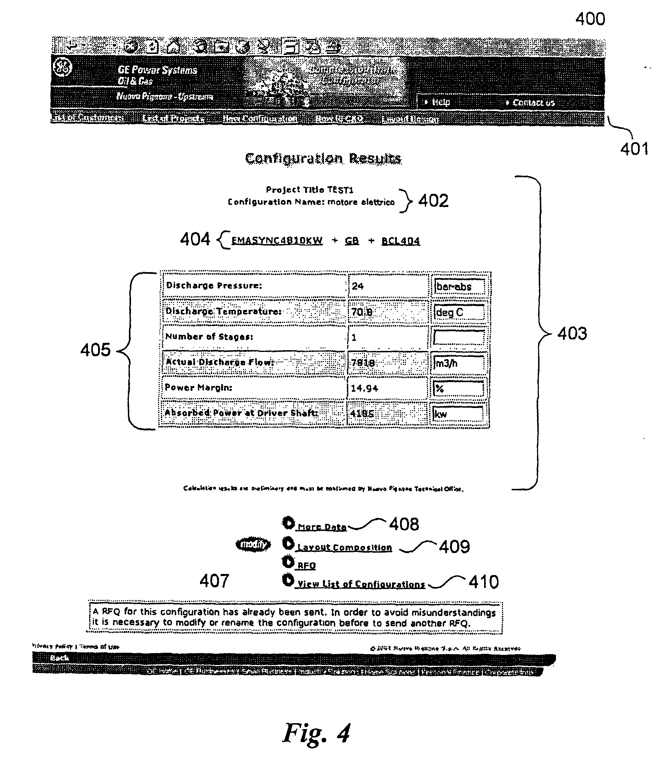

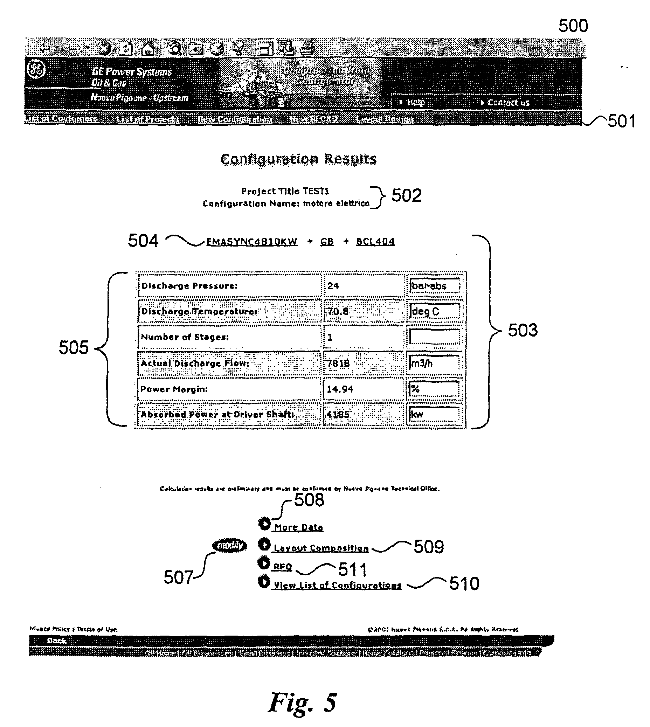

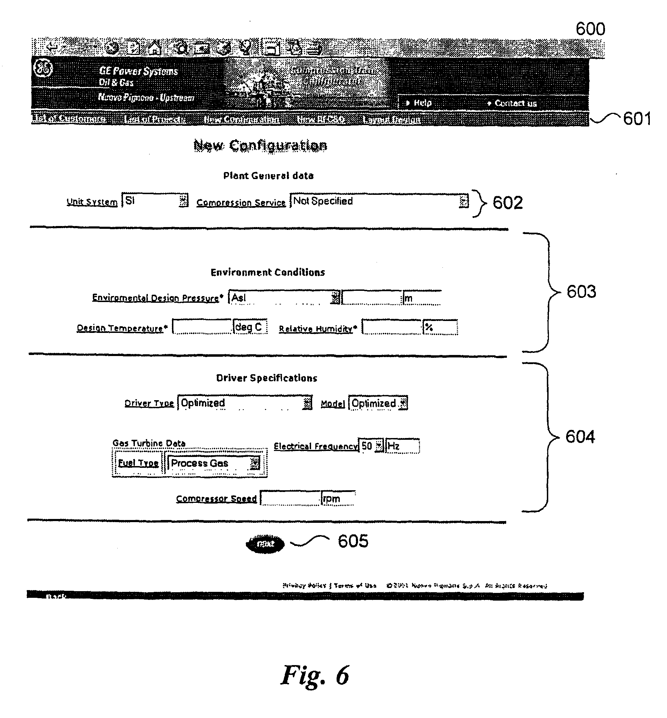

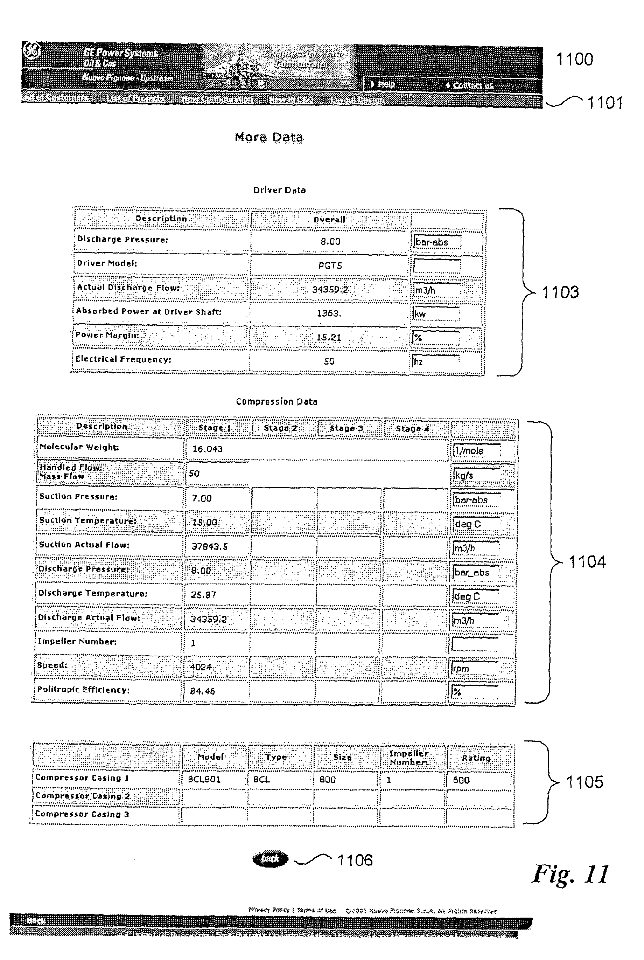

Figure 4 illustrates a display page for the results of a configuration data set when a request for quotation has already been sent to a seller. Display page 400 includes menubar 401, configuration data set identification area 402, and configuration results area 403. The configuration results area includes proposed configuration 404 and configuration characteristics 405. The proposed configuration indicates a driver target, gearbox, and one or more composition casings associated with the various stages of the proposed compression train. The configuration characteristics include discharge pressure, discharge temperature, number of stages, actual discharge flow, power margin, and absorbed power at drive shaft. The modify button 407 is used to modify the configuration data set using the display page of Figure 6. The more data button 408 is used to display more detailed information about the configuration data set as illustrated by Figure 11. The layout composition button 409 is used to display a layout for the proposed configuration in PDF form. The view list of configurations button 410 is used to list the configurations associated with the project as indicated by Figure 3. Figure 5 illustrates a display page for the results of the configuration data set when a request for quotation has not been sent to a seller. This figure is similar to Figure 4.

Figures 6-12 illustrate display pages relating to the creating of a new configuration data set. Figure 6 illustrates a display page for input of general data for a configuration data set. Display page 600 includes menubar 601, plant general data area 602, environment conditions area 603, driver specifications area 604, and next button 605. The plant general data area includes the units for the data and an indication of the compression service. The environment conditions area includes environmental design pressure, design temperature, and relative humidity. The driver specifications area includes the driver type, model, gas turbine data, electrical frequency and compressor speed. The gas turbine data includes fuel type. The next button is used to display the next display page for input of the configuration data. The following tables specify the contents of the fields of Figure 6.

| PLANT GENERAL DATA | | | |
|---|---|---|---|
| Name | Category | Valid Values List | Length/Type |
| Unit System | Input field | SI; U.S. system | CH*2 string, |
| Compression Service | Input filed | Gas Lift; Gas Processing & Recompression; Gas Reinjection; High Pressure Pipeline; Fuel Gas; Other; Not specified | CH*8 string, left justified |

| ENVIRONMENT CONDITIONS | | | |
|---|---|---|---|
| Name | Category | Valid Values List | Length/Type |
| | Input field | Asl; Environment Pressure | CH*4 string, left justified |
| Environmental Design Pressure | Input field | 0:2500 Sl 0:8200 U.S. system | CH*10 string, integer |
| Design Pressure | Input field | 0.87:1.3 SI 12.61:18.5 U.S. system | CH*10 string, numerical |
| Design Temperature | Input field | -50: 60 SI -58:140 U.S. system | CH*10 string, numerical |
| Relative Humidity | Input field | 0:100 | CH*10 string, numerical |

| DRIVER SPECIFICATION | | | |
|---|---|---|---|
| Name | Category | Valid Values List | Length/Type |
| Driver type | Input field | Optimized Optimized Electric Motor Gas Turbine Asynchronous Electric Motor Synchronous Electric Motor None | CH*3 string |
| Model (GST only) | Input field | Optimized; PGT5; PGT10; GE10/2; GE16; LM2500; LM2500+ HSPT; FRAME 5C; FRAME 5D | CH*8 string, left justified |
| Model (AEM only) | Input field | Optimized; 1250; 2250; 5500; 7000; 8000; 12000; | CH*5 string, left justified |
| Model (SEM only) | Input field | Optimized; 7000; 8000; 12000; 16000; 20000; | CH*5 string, left justified |
| Fuel Type (GST,OPD only) | Input field | Process gas Not specification Natural gas Given heat value Given Fuel gas | CH*3 string |
| Electrical Frequency | Input field | 50 60 | CH*2 string |
| Compressor Speed | Input field | 3000:20000 | CH*10 string |

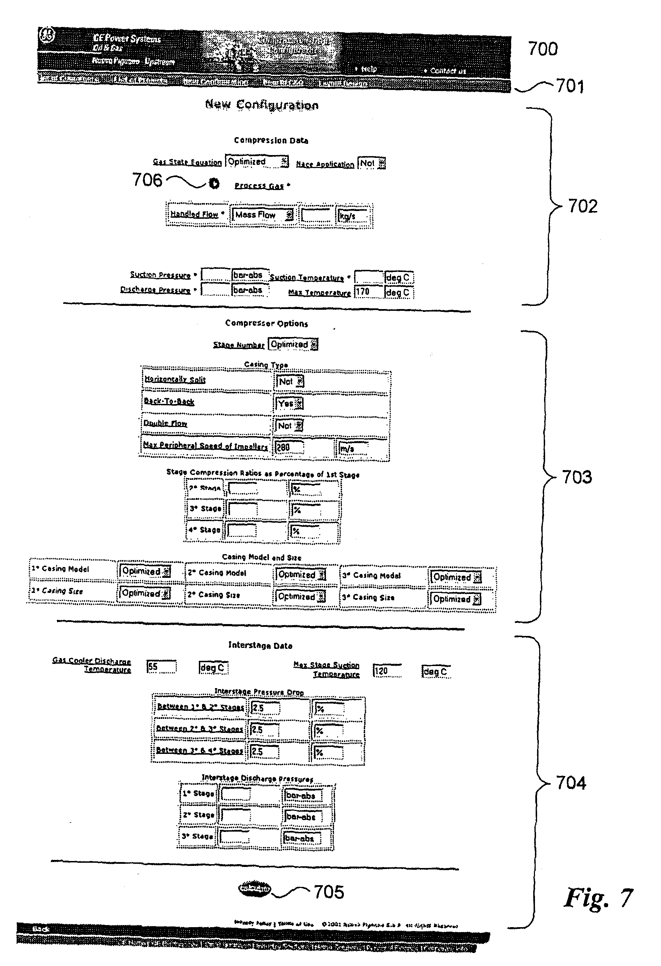

Figure 7 illustrates a display page for input of compression data for a configuration data set. Display page 700 includes menubar 701, compression data area 702, compressor options area 703, interstage data area 704, and calculate button 705. The compression data area includes gas state equation selection, suction pressure, suction temperature, and processed gas composition selection button 706. The compressor options include number of stages, casing type information, and casing model and size information. The interstage data includes gas cooler discharge temperature, interstage pressure drop information, and interstage discharge pressures. The calculate button is used to submit the configuration data set to the calculation engine for identifying a compression train configuration that satisfies the configuration data set. The following tables further specify the contents of the fields of Figure 7.

| COMPRESSION DATA | | | |
|---|---|---|---|
| Name | Category | Valid Values List | Length/Type |
| Gas State Equation | Input field | Optimized; BWR-Starling; Lee-Kesler | CH*3 string |
| Nace Application | Input field | Yes; Not | CH*4 string |
| Fuel Gas (FGS only) | Input field | Button | N/A |
| Fuel mole weight (NGS only) | Input field | >0 | CH*6 string, numerical |
| Fuel low heat value (LHV only) | Input field | >0 | CH*6 string, numerical |
| Process Gas | Input field | Button | N/A |
| Handled Flow | Input field | Mass Flow; Volume Flow; Normal Flow (@1atm, 0°C with SI only); Standard Flow (@14.7psia, 60°F with U.S only) | CH*3 string |
| | Input field | >0 | CH*10 string, numerical |
| Suction Pressure | Input field | 0:540 SI 0:7830 U.S. system | CH*10 string, numerical |
| Suction Temperature | Input field | -50:170 Sl -58:338 U.S. system | CH*10 string, numerical |
| Discharge Pressure | Input field | 0:540 Sl 0:7830 U.S. system | CH*10 string, numerical |
| Max Temperature | Input field | 170 Sl 338 U.S. system | CH*10 string, numerical |

| COMPRESSOR OPTIONS | | | |
|---|---|---|---|
| Name | Category | Valid Values List | Length/Type |
| Stage Number | Input field | Optimized; 1,2,3,4 | CH*1 string, numerical |

| Casing Type (according to impellers arrangement) | | | |
|---|---|---|---|
| Horizontally Split | Input field | Yes; Not | CH*3 string |
| Back-to-Back (not for Stage Number = 1) | Input field | Yes; Not | CH*3 string |
| Double Flow | Input field | Yes; Not | CH*3 string |
| Max Peripheral Speed of Impellers | Input field | | CH*10 string, numerical |
| If Nace Application = No | | 280 SI 918 U.S.system | |
| If Nace Application = Yes | | 250 Sl 821 U.S. system | |

| Stages ompression Ratio as % of 1^{st} Stage Compression Ratio (for the indicated number of stages) | | | |
|---|---|---|---|
| 2^{nd} Stage | Input field | N/A | CH*10 string, numerical |
| 3^{rd} Stage | Input field | N/A | CH*10 string, numerical |
| 4^{th} Stage | Input field | N/A | CH*10 string, numerical |

| Casing Model and Size (for the "actual" number of casing) | | | |
|---|---|---|---|
| 1^{st} Casing Model | Input field | Optimized MCL 2MCL DMCL BCL 2BCL DBCL | CH*4 string, right justified |
| 1^{st} Casing Size (MCL types) | Input field | Optimized 350 450 500 600 800 1000 1400 1800 | CH*4 string, left justified |

| INTERSTAGE DATA | | | |
|---|---|---|---|
| Name | Category | Valid Values List | Length/Type |
| Gas Cooler Discharge Temperature | Input field | 55 SI 131 U.S. system | CH*10 string, numerical |
| Max Stage Suction Temperature | Input field | 120 Sl 348 U.S. system | CH*10 string, numerical |

| Interstage Pressure Drop as % of Inlet Pressure (only for the indicated number of stages) | | | |
|---|---|---|---|
| Between 1^{st} & 2^{nd} Stages | Input field | 2.5 | CH*10 string, numerical |
| Between 2^{nd} & 3^{rd} Stages | Input field | 2.5 | CH*10 string, numerical |
| Between 3^{rd} & 4^{th} Stages | Input field | 2.5 | CH*10 string, numerical |

| Interstage Discharge Pressures (only for the indicated number of stages) | | | |
|---|---|---|---|
| 1^{st} Stage | Input field | N/A | CH*10 string, numerical |
| 2^{nd} Stage | Input field | N/A | CH*10 string, numerical |
| 3^{rd} Stage | Input field | N/A | CH*10 string, numerical |

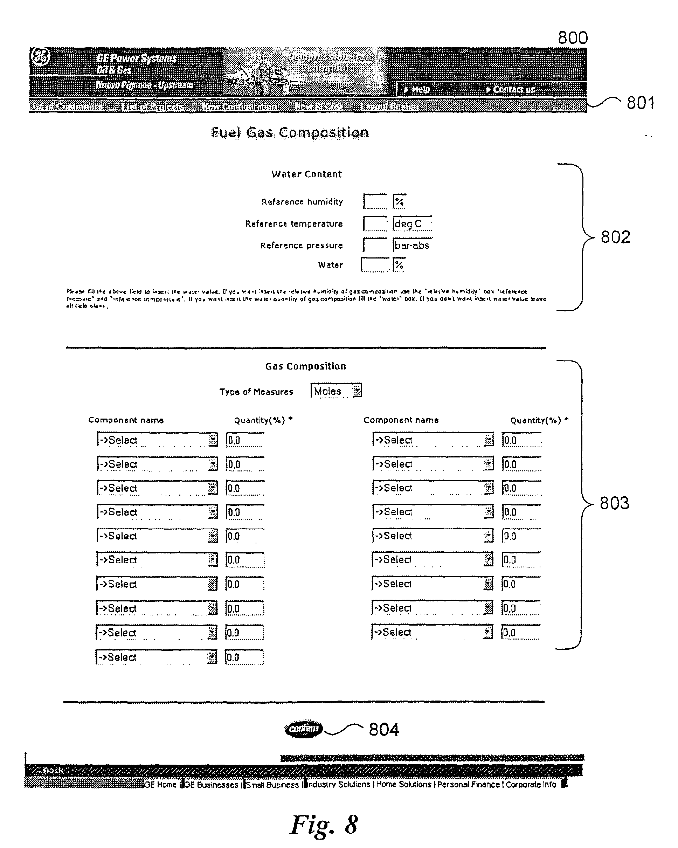

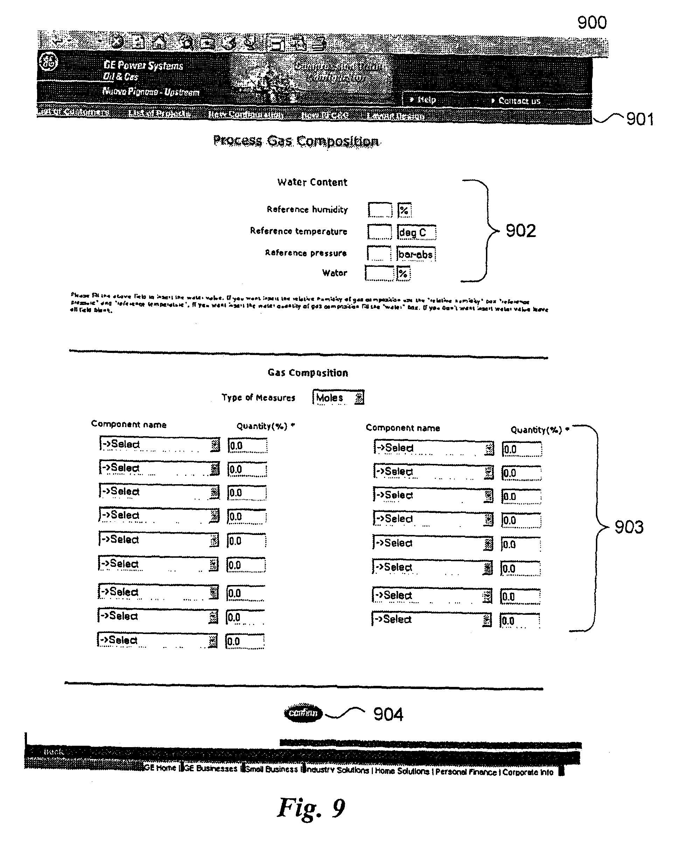

Figure 8 illustrates a display page for input of fuel gas composition information. Display page 800 includes menubar 801, water content area 802, gas composition information area 803, and confirm button 804. The water content area includes reference humidity, reference temperature, water, and reference pressure. The gas composition information indicates each gas component, quantity, and type of measures. The confirm button is used to confirm that the information entered is correct and return to the display page of Figure 6. Figure 9 illustrates a display page for input of processed gas composition information. This display page is similar to the display page represented by Figure 8. The following tables further illustrate the contents of Figures 8 and 9.

| WATER CONTENT DATA | | | |
|---|---|---|---|
| Name | Valid Values List | Category | Length/Type |
| Reference humidity | 0:100 | Input field | CH*10 string, numerical |
| Reference temperature | -50:170 SI -58:338 U.S. system | Input field | CH*10 string, numerical |
| Reference pressure | 0:500 Sl 0:7250 U.S. system | Input field | CH*10 string, numerical |
| Water | % | Input field | CH*10 string, numerical |

| GAS COMPOSITION DATA | | | |
|---|---|---|---|
| Name | Valid Values List | Category | Length/Type |
| Component Name | Methane Ethane Propane normal Butane iso Butane normal Pentane iso Pentane neo Pentane normal Hexane methyl Pentane 2 methyl Pentane 3 dimethyl Butane 2,2 dimethyl Butane 2,3 normal Heptane normal Octane Ethylene Propylene Gas Name 1-Butene cis 2-Butene trans 2-Butene iso Butene Air (as pure component) Helium Argon Hydrogen Nitrogen Oxygen Hydrogen Sulfide Carbon Monoxide Carbon Dioxide Sulfur Dioxide Nitric Oxide | Input field | CH*4 string, left justified |
| Quantity | % | Input field | CH*10 string, numerical |
| Type of measures | Mole; Weight | Input field | CH*10 string, numerical |

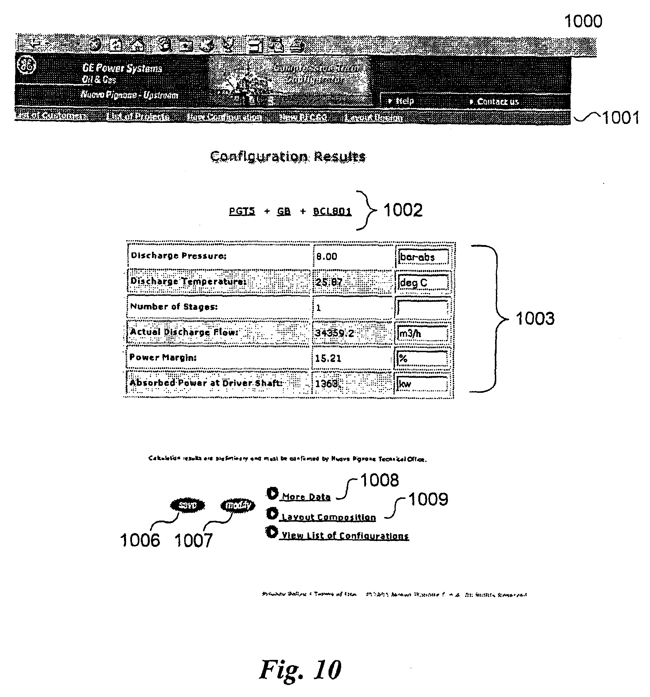

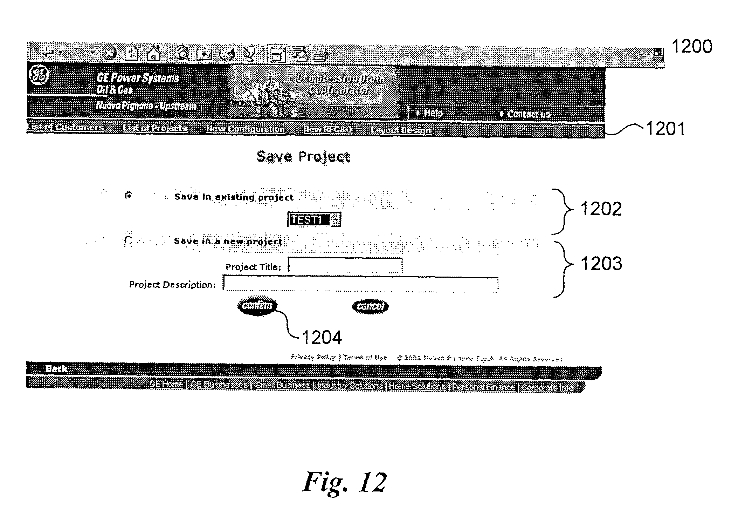

Figure 10 illustrates a display page for output of the configuration results. Display page 1000 includes menubar 1001, configuration data set identification area 1002, and configuration results area 1003. The save button 1006 is used to save a configuration and return to the display page of Figure 12. The modify button 1007 is used to modify a configuration and return to the display page of Figure 7. The more data button 1008 is used to display more detailed information about the configuration data set as illustrated by Figure 11. The layout composition button 1009 is used to display a layout for the proposed configuration in PDF form. This display page is similar to the display page of Figure 5.

Figure 11 illustrates a display page that displays more detailed configuration results data. Display page 1100 includes menubar 1101, driver data area 1103, compression data area 1104, casing data area 1105, and back button 1106. The following tables further illustrate the field of display page 1100.

| DRIVER DATA | | | |
|---|---|---|---|
| Name | Category | Valid Values List | Length/Type |
| Discharge Pressure | Output field | decimal >0 | CH*10 numerical |
| Driver Model (Driver Target) | Output field | | CH*12 string |
| Actual Discharge Flow | Output field | | As input |
| Absorbed Power at Driver shaft (all losses included) | Output field | decimal >0 | CH*10 numerical |
| Power Margin (referred to Absorbed Power at Driver) | Output field | decimal | CH*10 numerical |
| Electrical Frequency (only if electric motor) | Output field | | |

| COMPRESSION DATA | | | |
|---|---|---|---|
| Name | Category | Valid Values List | Length/Type |
| Molecular Weight (Inlet Mole Weight ) | Output field | decimal >0 | CH*10 numerical |
| Handled Flow Type | Output field | decimal >0 | CH*10 numerical |

| Stage Conditions (i=1:4 is the stage number) | | | |
|---|---|---|---|
| Suction Pressure | Output field | decimal >0 | CH*10 numerical |
| Suction Temperature | Output field | decimal | CH*10 numerical |
| Suction Actual Flow | Output field | decimal >0 | CH*10 numerical |
| Discharge Pressure | Output field | decimal >0 | CH*10 numerical |
| Discharge Temperature | Output field | decimal | CH*10 numerical |
| Discharge Actual Flow | Output field | decimal >0 | CH*10 numerical |
| Impellers Number | Output field | 1:9 | CH*2 numerical |
| Speed | Output field | decimal >0 | CH*10 numerical |
| Politropic Efficiency | Output field | decimal 0:100 | CH*10 numerical |

| Casings (i=1:3 is the casing number) | | | |
|---|---|---|---|
| Model | Output field | N/A | CHA*4 string |
| Size | Output field | N/A | CHA*4 string |
| Rating | Output field | N/A | CHA*5 numerical |
| Type | Output field | N/A | CHA*2 |
| Impellers Number | Output field | decimal >0 | CH*2 numerical |

Figure 12 illustrates a display page for saving the configuration data set. Display page 1200 includes menubar 1201, project identification area 1202, configuration data set identification area 1203, and OK button 1204. The user inputs the name of an existing or new project and the name of an existing or new configuration data set and selects the OK button to save the configuration data set.

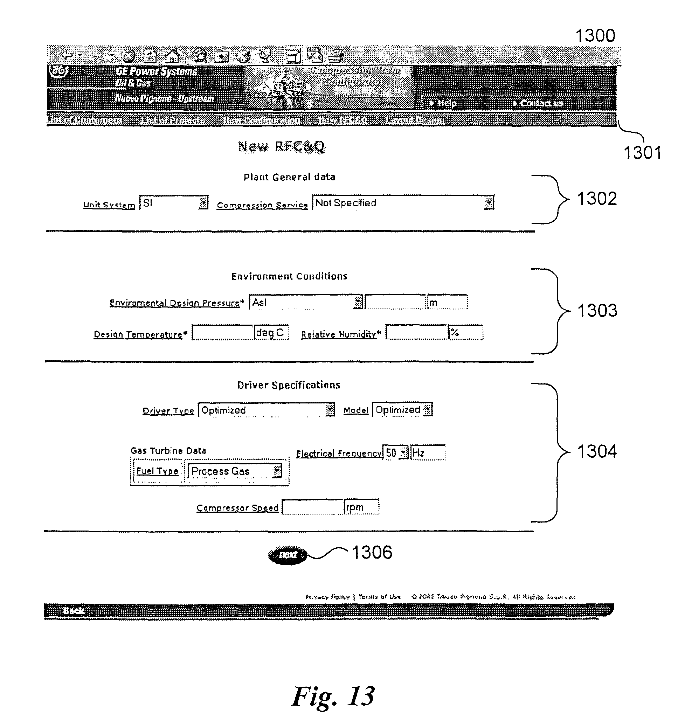

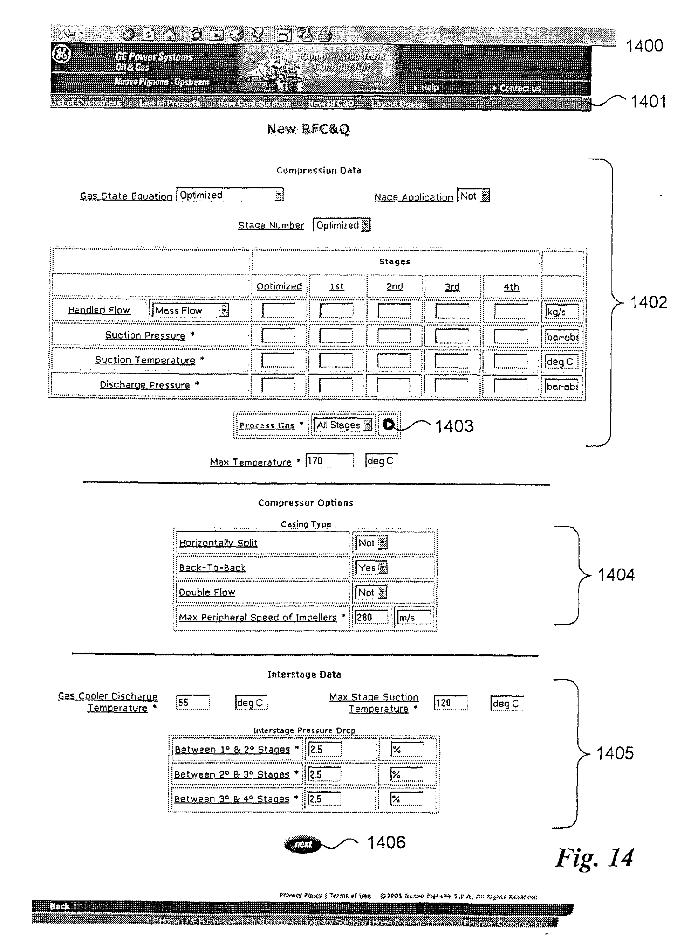

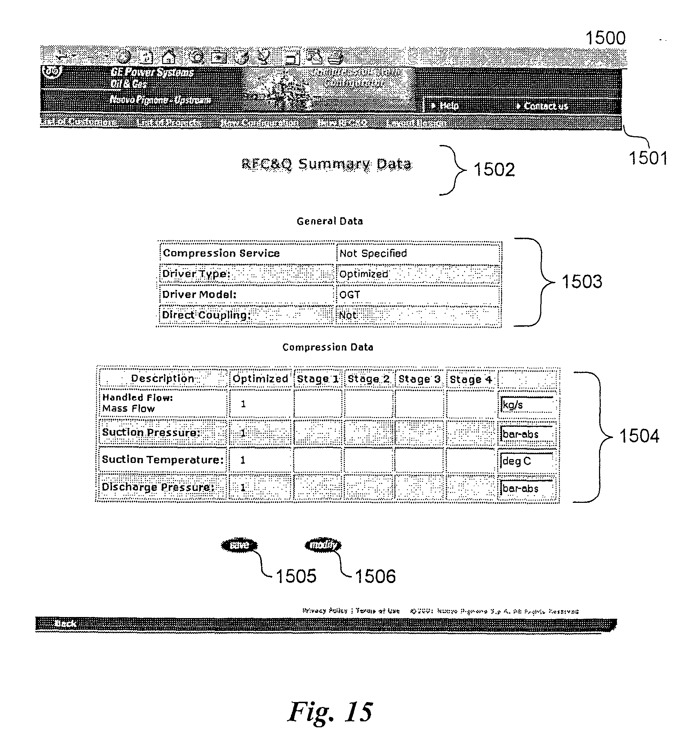

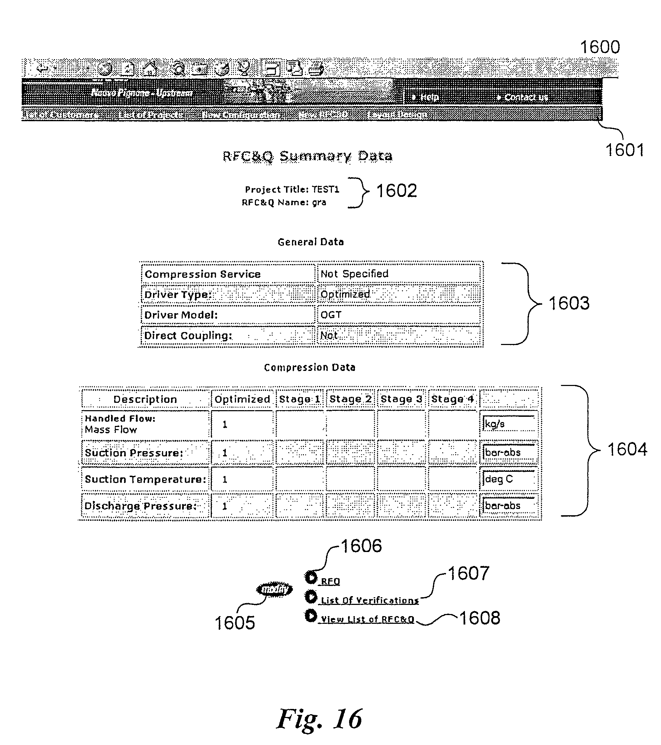

Figures 13-16 illustrate display pages for entry of a new RFC&Q data set. Figure 13 illustrates a display page for entry of general data for a new RFC&Q. Display page 1300 includes menubar 1301, plant general data area 1302, environment conditions area 1303, and driver specifications area 1304. The web page also includes the next button 1306. This display page is analogous to the display page of Figure 6 for entry of new configuration data. Figure 14 illustrates a display page for entry of compression related data for a new RFC&Q data set. Display page 1400 includes menubar 1401, compression data area 1402, compressor options data area 1404, and interstage data area 1405. The compression data area includes processed gas composition selection button 1403. The display page also includes next button 1406. This display page is analogous to the display page of Figure 7 for entry of new configuration data. Figure 15 illustrates a display page that shows summary data before saving the RFC&Q data. Display page 1500 includes menubar 1501, RFC&Q identification area 1502, general data area 1503, and compression data area 1504. The display page also includes save button 1505 and modify button 1506. The modify button is used to modify the RFC&Q data using the display page of Figure 13. Figure 16 illustrates a display page showing summary data after saving the RFC&Q data. Display page 1600 is similar to display page 1500 except that the RFC button 1606 and the view list of RFC&Q button 1608 are provided.

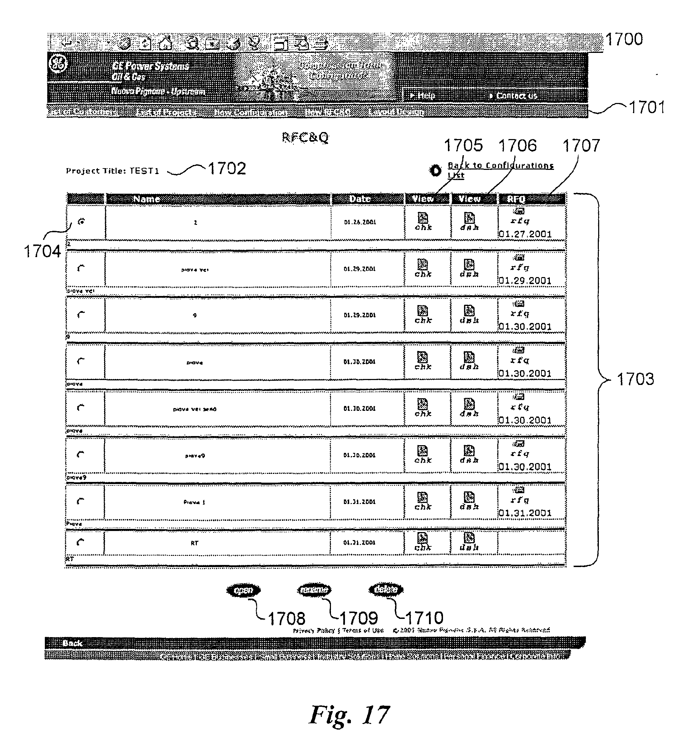

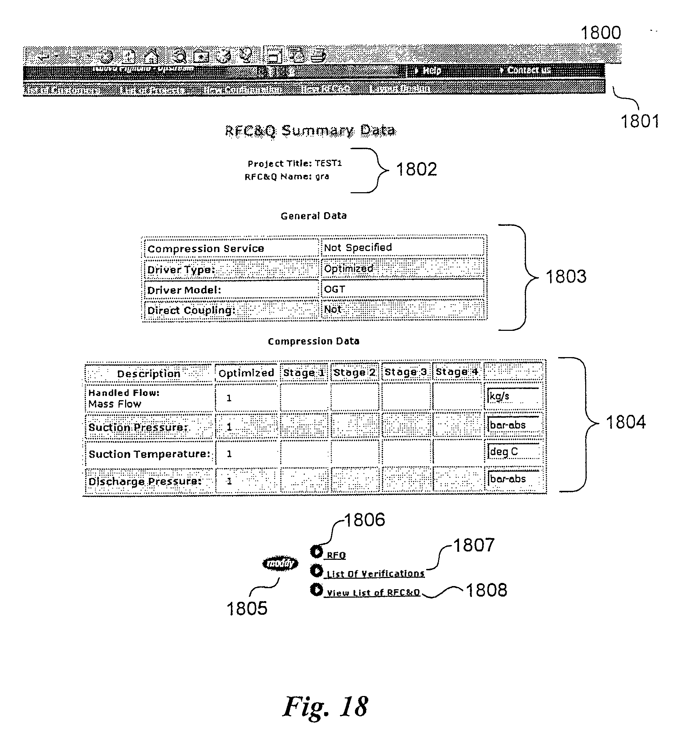

Figures 17-18 illustrate display pages for viewing RFC&Q data. Figure 17 illustrates a display page showing the RFC&Q data that has been defined. Display page 1700 includes menubar 1701, project title area 1702, list of RFC&Q data area 1703, and RFC&Q data entry 1704. This display page is similar to the display page of Figure 3 for configuration data sets. Figure 18 illustrates a display page with summary data for an RFC&Q data set for which no RFQ has been submitted. Display page 1800 is similar to display page 1600.

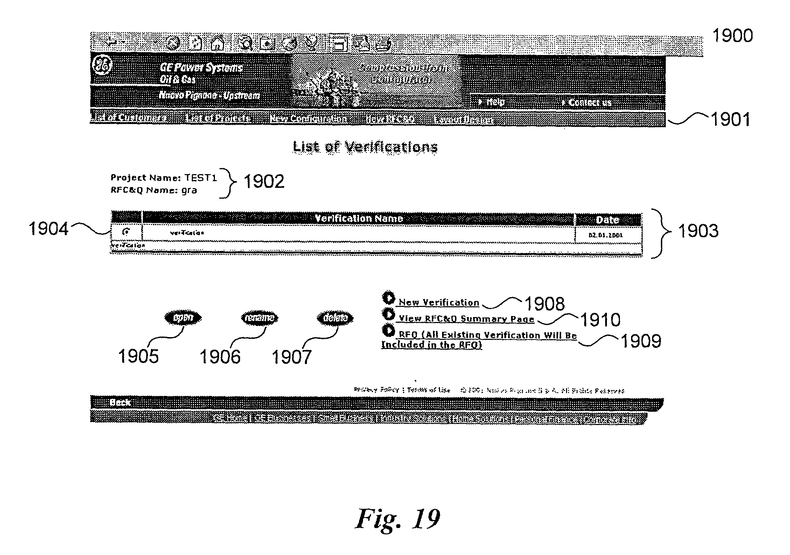

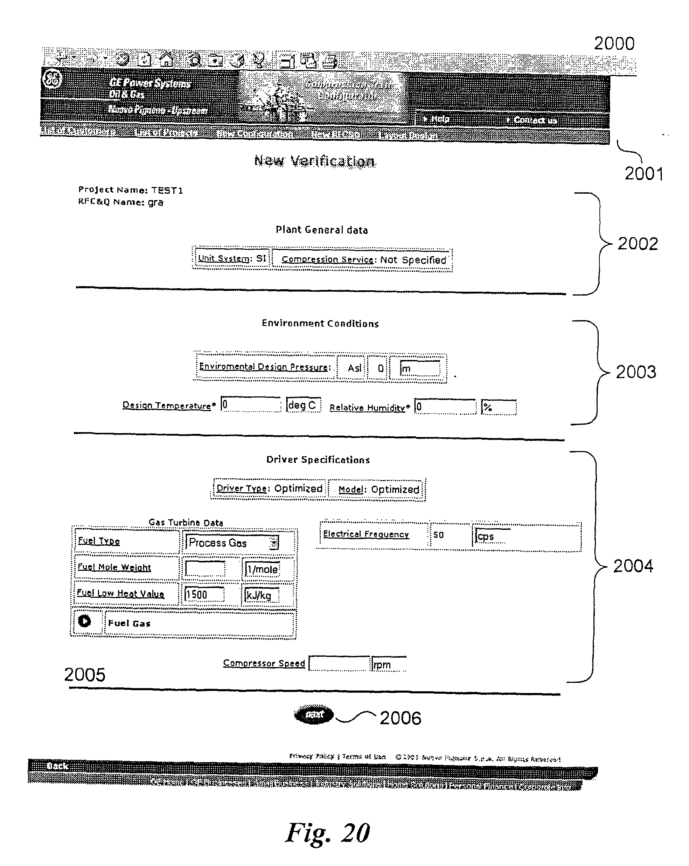

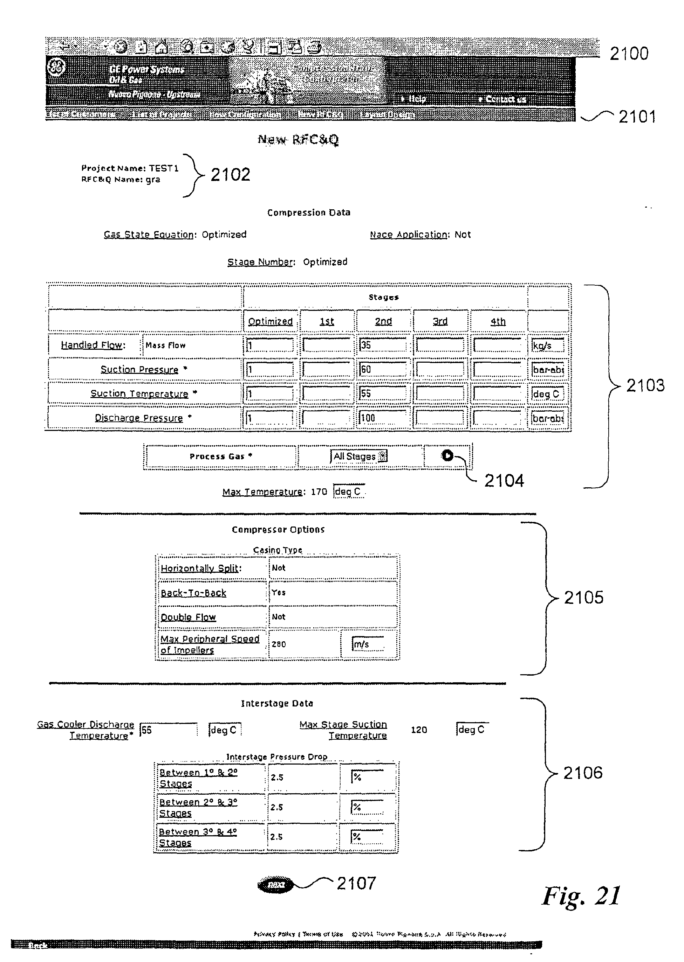

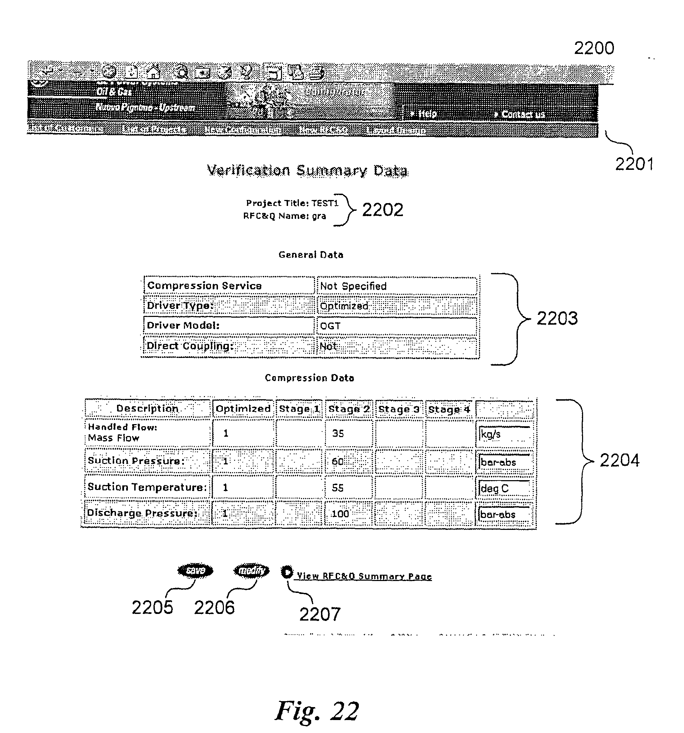

Figures 19-22 illustrate display pages related to verification of RFQs. Figure 19 illustrates a display page that lists verifications for RFC&Q data. Display page 1900 includes menubar 1901, RFC&Q identification area 1902, verification list 1903, and verification entry 1904. Each of the verification entries includes a selection radio button, verification name, creation date, and description area. The display page also includes an open button 1905, rename button 1906, delete button 1907, new verification button 1908, RFQ button 1909, and view list of RFC&Qs button 1910. The open button allows a user to view and modify the data associated with the selected verification. The rename and delete buttons are used to rename or delete the selected verification. The new verification button is used to define a new verification. The RFQ button is used to submit a request for quotation for all the verifications, and the view list of RFC&Q button is used to display the list as indicated by the Figure 17. Figure 20 illustrates a display page for entry of a new verification. Display page 2000 includes menubar 2001, plant general data area 2002, environment conditions area 2003, and driver specifications area 2004. This display page is similar to the display page of Figure 6 for entry of configuration data. Figure 21 illustrates a display page for entry of compression related verification data. Display page 2100 is similar to display page 700 for entry of configuration data. Figure 22 illustrates the display page for showing summary data for a verification. Display page 2200 is similar to display page 800 for configuration data.

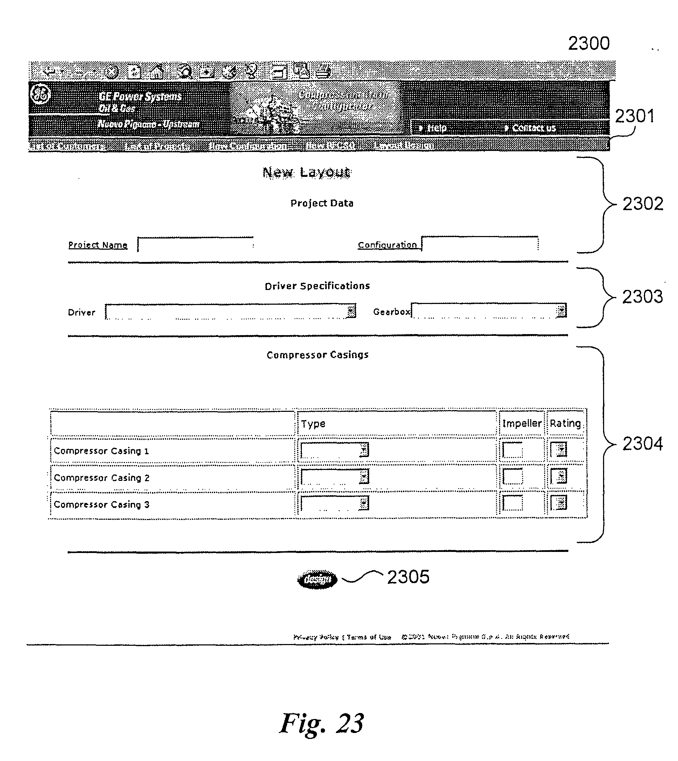

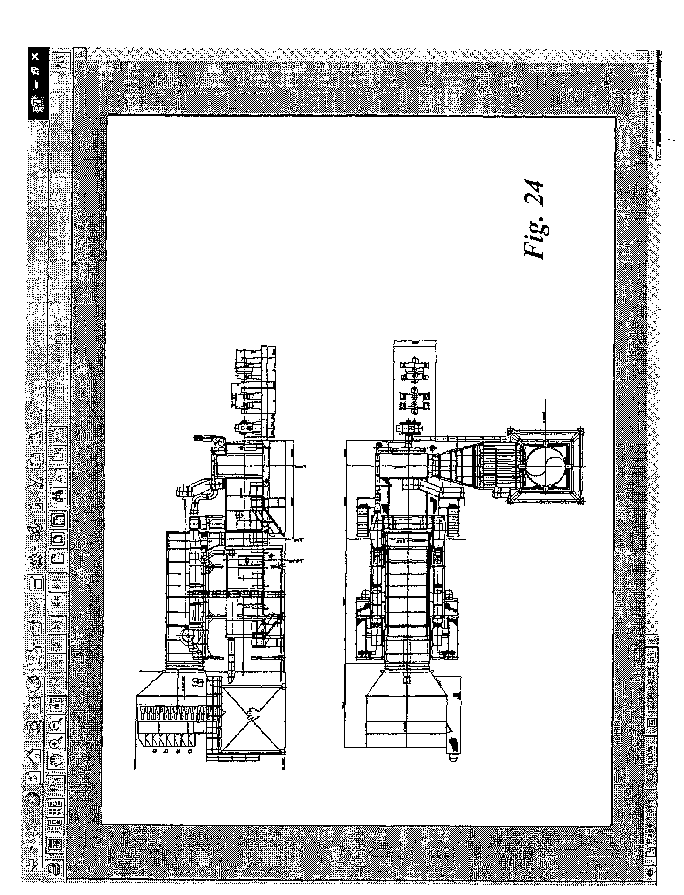

Figure 23 illustrates a display page for specifying a layout design. Display page 2300 includes menubar 2301, project data area 2302, driver specifications area 2303, and compressor casings area 2304. This display page is used to define the layout for the proposed compression train. The user selects the driver specifications and compressor casings for the configuration. When a user selects the design button 2305 to view a PDF form of the layout. Figure 24 illustrates a display page displaying a PDF form of the layout.

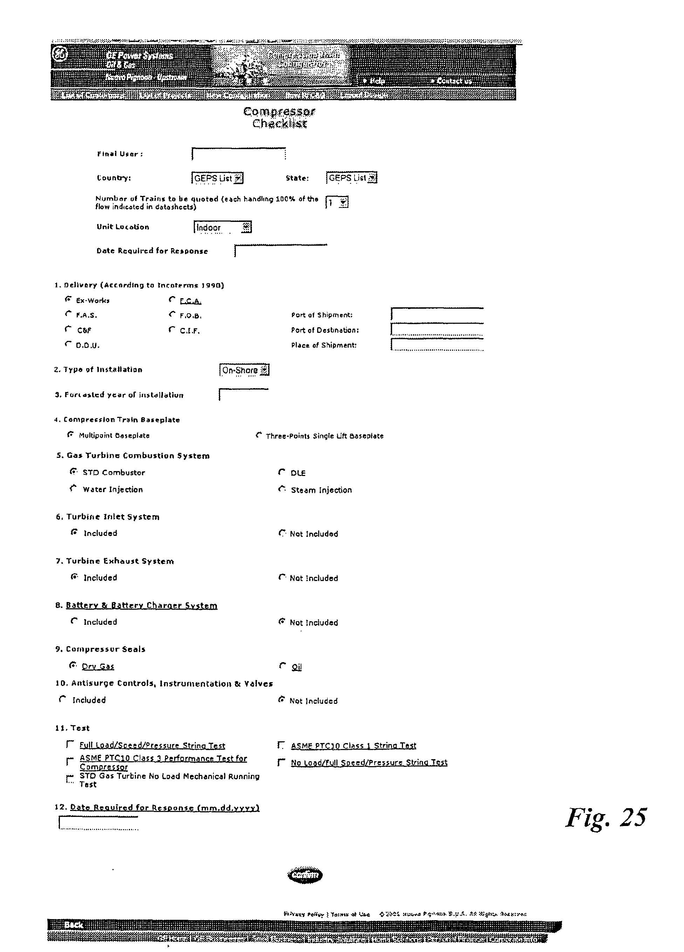

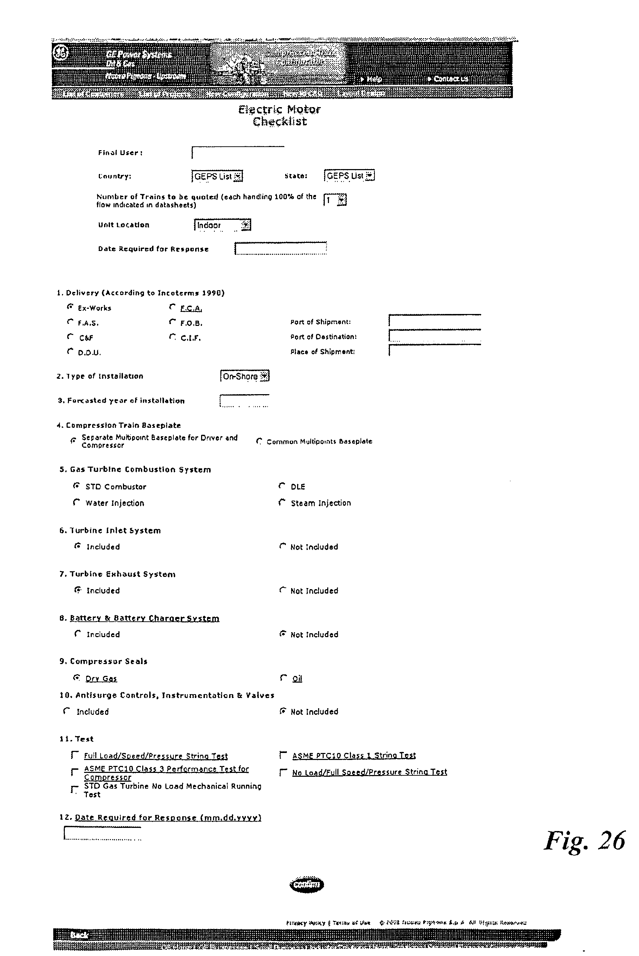

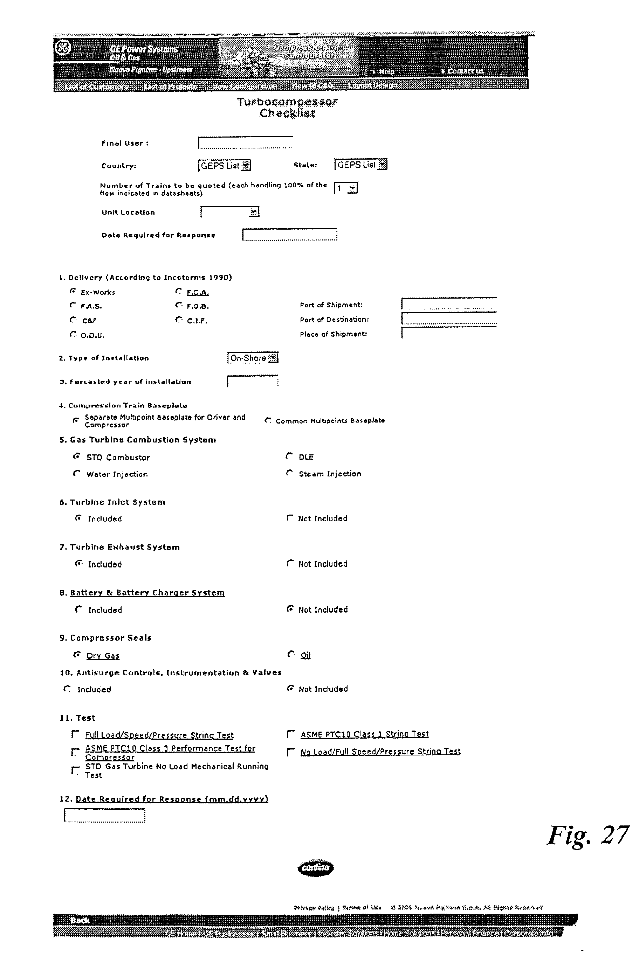

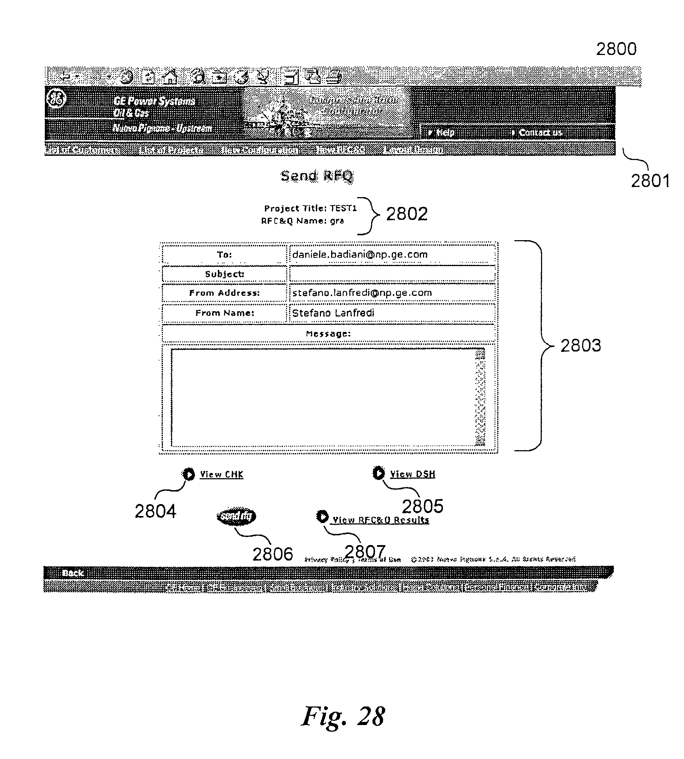

Figures 25-27 illustrate display pages for entry of additional information for a checklist associated with an RFQ. Figure 25 illustrates display page for an RFQ checklist for a compressor without the driver. Figure 26 illustrates a display page for entry of an RFQ checklist with an electric motor. Figure 27 illustrates a display page for entry of an RFQ checklist with a turbocompressor. Figure 28 illustrates a display page for submitting an RFQ. Display page 2800 includes menubar 2801, configuration identification area 2802, and additional information area 2803. The user selects the send request button 2806 to send the request to the seller. The user selects the view checklist button 2804 to view the checklist associated with the RFQ. The user selects the view data sheet button 2805 to view the data sheet associated with the RFQ. The user selects the view configuration results button 2807 to view the results of the configuration.

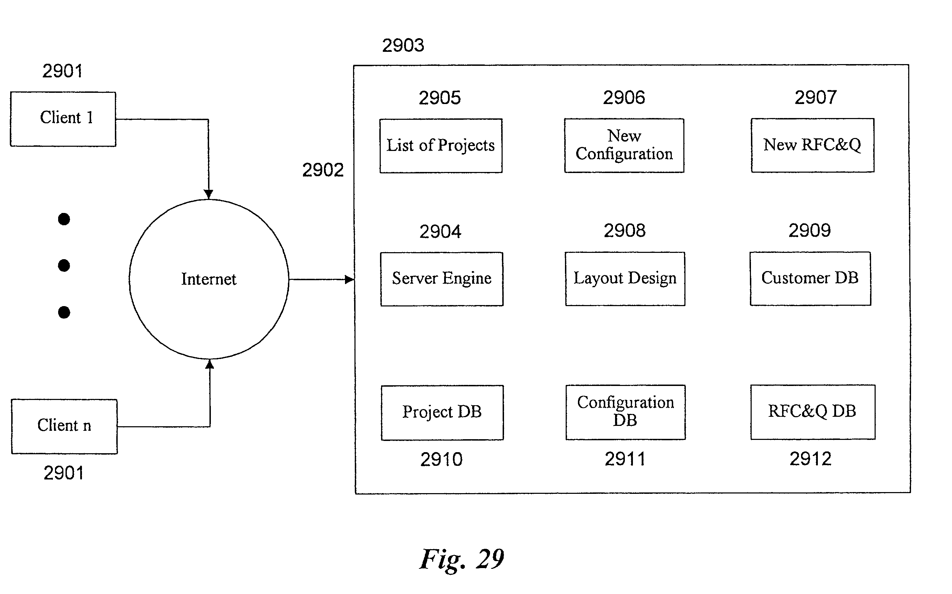

Figure 29 is a block diagram illustrating the components of the presentation system in one embodiment. The presentation system includes client computers 2901 and server computer 2903 that are interconnected via the Internet 2902. The computers may include a central processing unit, memory unit, input devices (e.g., keyboard and pointing devices), output devices (e.g., display devices), and storage devices (e.g., disk drives). The memory and storage devices are computer-readable media that may contain instructions that implement the presentation system. In addition, the data structures and message structures may be stored or transmitted via data transmission media such as a signal on a communications link. Communication channels other than the Internet may be used, such as local area network, wide area networks, or point-to-point dial-up connections. The client computers may include a standard web browser for viewing display pages (e.g., web pages) provided by the server system. In one embodiment, the server system includes a server engine 2904, list of projects component 2905, new configuration component 2906, new RFC&Q component 2907, layout design component 2908, customer database 2909, project database 2910, configuration database 2911, and RFC&Q database 2912. The server engine receives requests for display pages from the client computers, invokes the appropriate components of the presentation system, and sends the display pages generated by the invoked components to the client computers. The list of project component controls the creation and management of projects for the presentation system. This component is invoked when the list of projects menu item is selected. The new configuration component controls the creation of new configuration data sets. This component is invoked when the new configuration menu item is selected. The new RFC&Q component creates a new request for configuration and quotation data sets. This component is invoked when the user selects the new RFC&Q menu item. The layout design component controls the creating of a layout design. The layout design component is invoked when the user selects the layout design menu item. The various databases contain information defining authorized customers, defined projects, defined configuration data sets, and defined RFC&Q data sets.

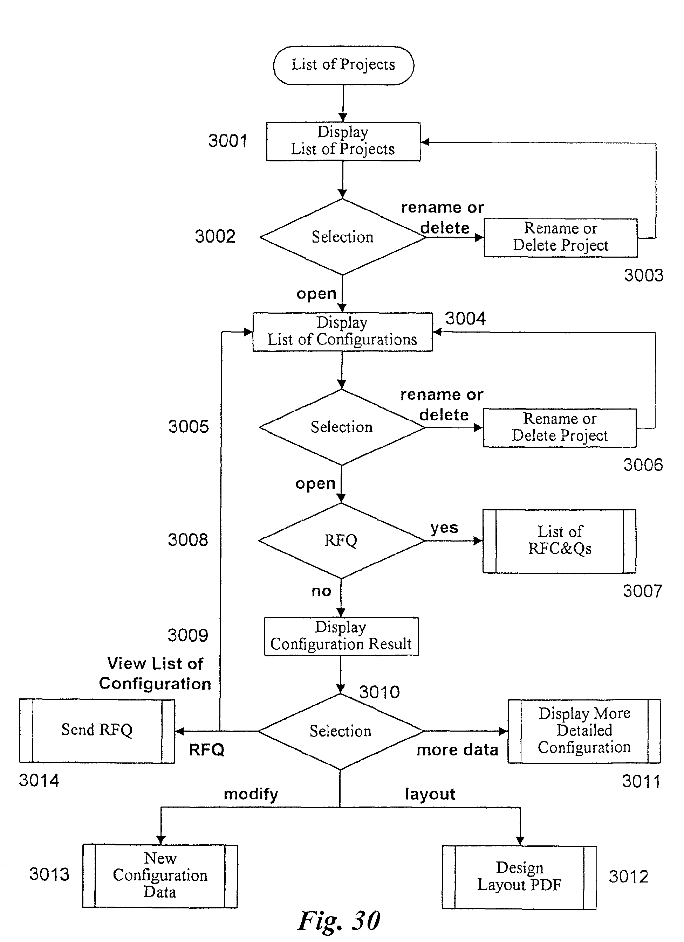

Figure 30 is a flow diagram illustrating the processing of the list of projects component in one embodiment. In block 3001, the component retrieves the list of projects defined for the user from the project database and displays that list to the user. In decision block 3002, if the user selects the rename or delete button, then the component continues at block 3003. In block 3003, the component controls the renaming or deleting of the selected project and then the loops to block 3001 to display the list of projects. In decision block 3002, if the user selects the open button, then the component continues at block 3004. In block 3004, the component retrieves the list of configurations defined in the configuration database for the selected project. In decision block 3005, if the user selects the rename or delete button, then the component continues at block 3006. In block 3006, the component renames or deletes the selected configuration data set and loops to block 3004 to display the list of configuration data sets. In decision block 3005, if the user indicates to list the RFC&Qs, then the component continues at block 3007 to list the RFC&Qs for the selected project. In decision block 3005, if the user selects the open button, then the component continues at block 3008. In decision block 3008, if an RFQ has been sent for the selected configuration data set, then the component continues with the appropriate processing as indicated by the ellipses, else the component continues at block 3009. In block 3009, the component displays the summary data for the selected configuration data set. In decision block 3010, if the user selects more data, then the component displays more detailed information about the configuration results in block 3011 and continues at block 3009. In decision block 3010, if the user selects to design the layout information, then the component continues to display the layout design in PDF form 3012. In decision block 3010, if the user selects the new configuration button, the component invokes the new configuration component in block 3013. In decision block 3010, if the user selects to send a request for quotation, then the component sends the request for quotation in block 3014.

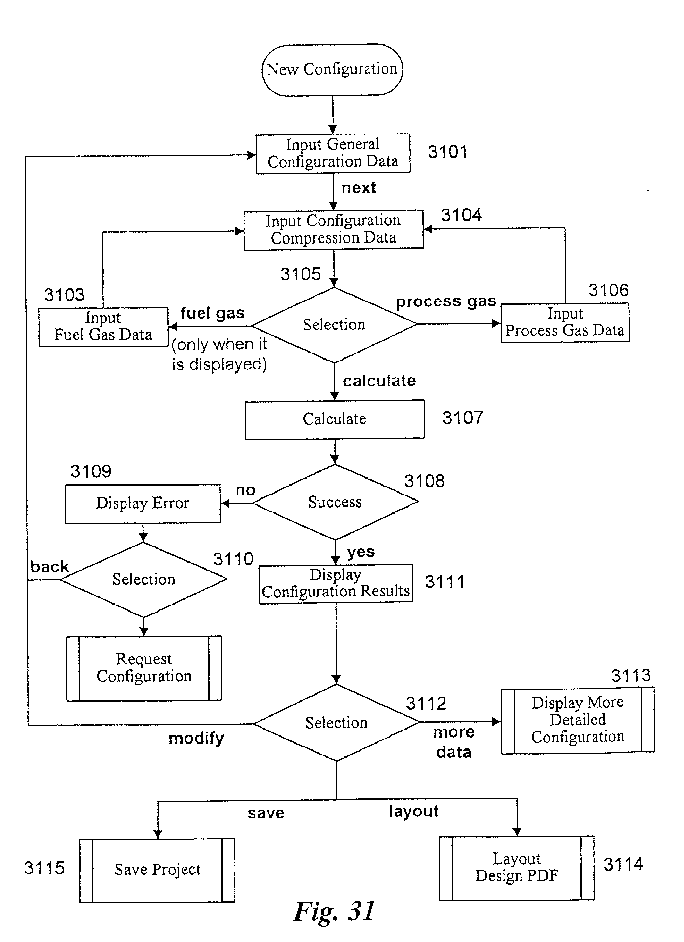

Figure 31 is a flow diagram illustrating the processing of the new configuration component in one embodiment. In block 3101, the component inputs the general configuration data for a new configuration data set. If the user selects the next button, then the component continues at block 3104. In block 3104, the component inputs the compression data for the configuration data set. In decision block 3105, if the user selects the fuel gas button (only when this button is displayed), then the component inputs the fuel gas data composition data in block 3103 and loops to block 3104. In decision block 3105, if the user selects the process gas button, then the component continues at block 3106 to input the process gas composition data and loops to block 3104. In decision block 3105, if the user selects the calculate button, then the component continues at block 3107. In block 3107, the component identifies a compression train that satisfies the new configuration data set. In decision block 3108, if a compression train was identified that satisfies the configuration data set, then the component continues at block 3111, else the component continues at block 3109. In block 3109, the component displays an error. In decision block 3110, if the user indicates to go back to the input display page, then the component continues at block 3101, else the component continues to allow the user to submit an RFC&Q. In block 3111, the component displays the configuration results. In decision block 3112, if the user selects the more data button, then the component displays the more detailed configuration results data in block 3113 and continues at block 3111. In decision block 3112, if the user selects the layout design button, then the component invokes the layout design PDF form. In decision block 3112, if the user selects the save button, then the component saves the project in block 3115 and continues at block 3111. In decision block 3112, if the user selects the modify button, then the component loops to block 3101 to modify the configuration data.

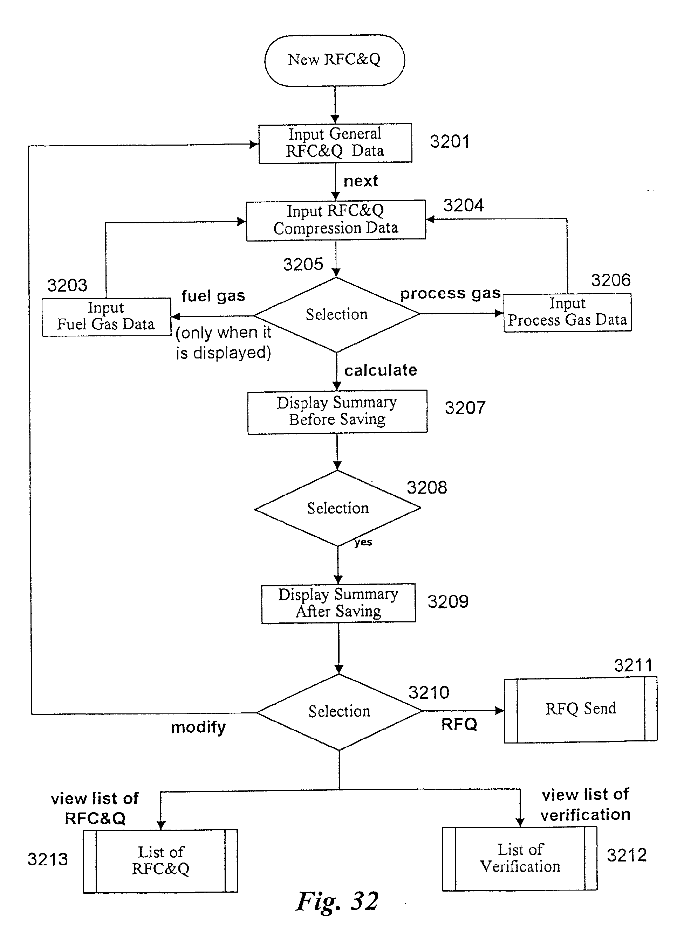

Figure 32 is a flow diagram illustrating the processing of the new RFC&Q component in one embodiment. In block 3201, the component inputs the general RFC&Q data for the data set. If the user selects the next button, then the component continues at block 3204. In block 3204, the component inputs the RFC&Q compression data. In decision block 3205, if the user selects the fuel gas button (only when this button is displayed), then the component inputs the fuel gas composition data in block 3203 and loops to block 3204. In decision block 3205, if the user selects the process gas button, the component inputs the process gas composition data in block 3206 and loops to block 3204. In decision block 3205, if the user selects the next button, then the component continues at block 3207. In block 3207, the component displays the summary before saving data for the RFC&Q data. In decision block 3208, if the user selects the save button, then the component continues at block 3209. In block 3209, the component displays the summary after saving data. In decision block 3210, if the user selects the RFQ button, then the component sends an RFQ to the seller in block 3211 and continues at block 3207. In decision block 3210, if the user selects the list of verification button, then the component invokes the list of verifications component in block 3212. In decision block 3210, if the user selects the view list of RFC&Q button, then the component invokes the list of RFC&Q component in block 3213. In decision block 3210, if the user selects the modify button, the component continues at block 3201.

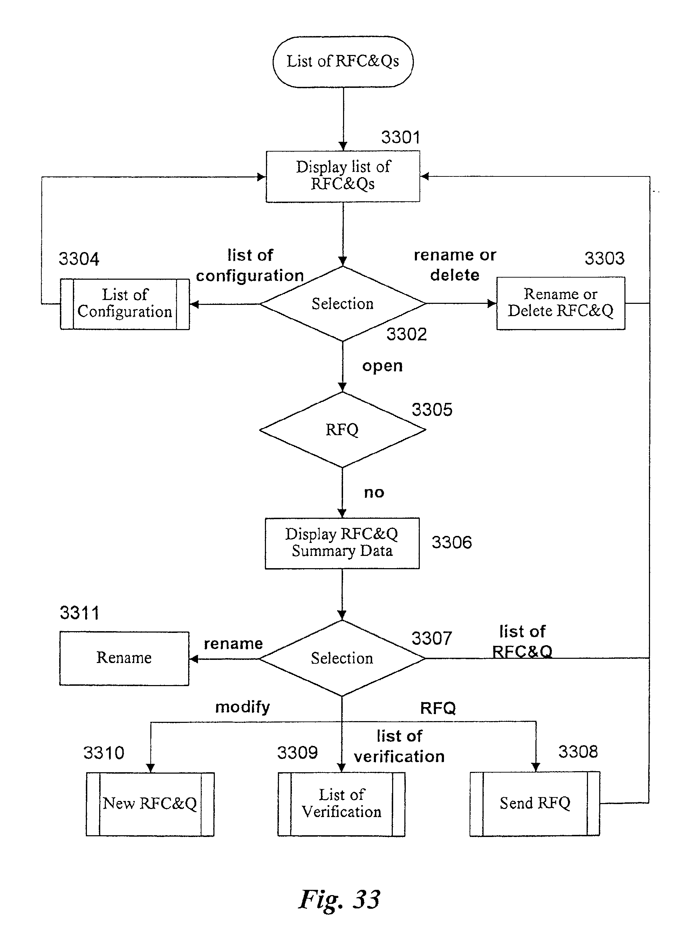

Figure 33 is a flow diagram of the list of RFC&Qs component in one embodiment. In block 3301, the component retrieves and displays the list of RFC&Qs for the user. In decision block 3302, if the user selects the rename or delete button, then the component renames or deletes the selected RFC&Q and continues at block 3301. In decision block 3302, if the user selects the list of configuration button, then the component invokes the list of configuration component in block 3304. In decision block 3302, if the user selects the open button, then the component continues at block 3305. In block 3305, if an RFQ has been sent for the selected RFC&Q data set, the component continues at the ellipses, else the component continues at block 3306. In block 3306, the component displays the RFC&Q summary data for the selected RFC&Q data set. In decision block 3307, if the user selects the list of RFC&Qs, then the component continues at block 3301. In decision block 3307, if the user selects the RFQ button, then the component sends the RFQ in block 3308 and loops to block 3301. In decision block 3307, if the user selects the list of verification button, then the component invokes the list of verification component in block 3309. In decision block 3307, the user selects the new RFC&Q button, then the component invokes the new RFC&Q component in block 3310. In decision block 3307, if the user selects the rename button, then the component renames the RFC&Q data set in block 3311 and then continues at block 3306.

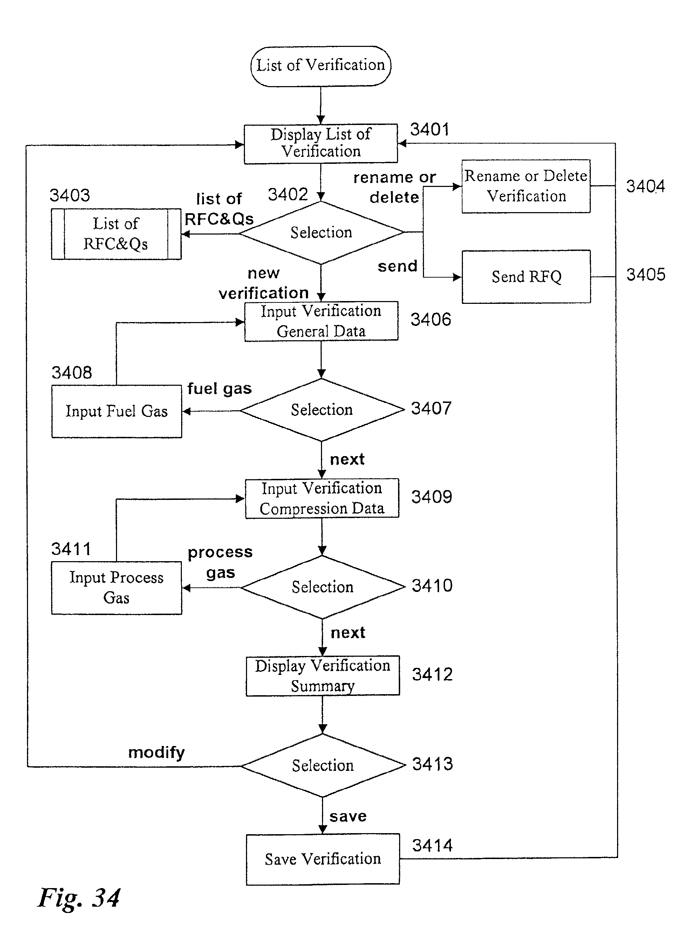

Figure 34 is a flow diagram of the list of verifications component. In block 3401, the component retrieves the list of verifications for the user and displays that list. In decision block 3402, if the user selects the rename or delete button, then the component renames or deletes the selected verification block 3404 and continues at block 3401. In decision block 3402, if the user selects the RFQ button, then the component sends the RFQ for the selected verification in block 3405. In decision block 3402, if the user selects the list of RFC&Qs button, then the component invokes the list of RFC&Qs component in block 3403. In decision block 3402, if the user selects the new verification button, then the component continues at block 3406. In block 3406, the component inputs the general data for a verification data set. In decision block 3407, if the user selects the fuel gas button, then the component inputs the fuel gas composition in block 3408 and continues at block 3406. In decision block 3407, if the user selects the next button, then the component continues at block 3409. In block 3409, the component inputs the verification compression data. In decision block 3410, if the user selects the process gas button, then the component inputs the process gas composition in block 3411 and continues at block 3409. In decision block 3410, if the user selects the next button, then the component continues at block 3412. In block 3412, the component displays the verification summary data. In decision block 3413, if the user selects the modify button, then the component continues at block 3406 to modify the verification data. In decision block 3413, if the user selects save button, then the component saves the verification data in block 3414 and continues at block 3401.

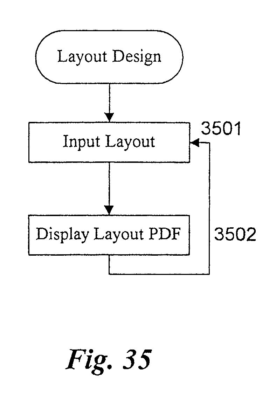

Figure 35 is a flow diagram illustrating the processing of a layout design component in one embodiment. In block 3501, the component inputs the layout design. If the user selects the design button the component displays the PDF form of the layout top and front views in block 3502 and continues at block 3501.

For the sake of good order, various aspects of the invention are set out in the following clauses:-
1. A method in a computer system for presenting data relating to selection of a compression train, the method comprising:
   receiving from a user a configuration data set that specifies operating conditions for a compression train (3101, 3103, 3104, 3105, 3106, 3107);
   sending the configuration data set to the calculation engine;
   receiving from the calculation engine a proposed configuration for the compression train developed based on the sent configuration data set (3107);
   sending to the user a display page indicating the proposed configuration (3111); and
   receiving from the user a request for a quotation for the proposed configuration (3014).
2. The method of clause 1 wherein a computer of the user is connected to the computer system via the Internet.
3. The method of clause 1 wherein the display page is a web page.
4. The method of clause 1 including
   receiving from the user a layout design for the proposed configuration; and
   sending to the user a display page illustrating the received layout design.
5. The method of clause 1 wherein the computer system allows the user to group configuration data sets into projects.
6. The method of clause 1 wherein the configuration data set includes environmental conditions, driver specifications, and compression data.
7. The method of clause 6 wherein the environmental conditions include design pressure and design temperature.
8. The method of clause 6 wherein the driver specification includes driver type, gas turbine data, and compressor speed.
9. The method of clause 6 wherein the driver specification includes fuel gas composition.
10. The method of clause 6 wherein the compression data includes suction pressure, discharge pressure, and suction temperature.
11. The method of clause 6 wherein the compression data includes process gas composition.
12. The method of clause 1 wherein the operating conditions include compressor options.
13. The method of clause 12 wherein the compressor options include casing type.
14. The method of clause 12 wherein the compressor options include stage compression ratios.
15. The method of clause 1 wherein the operating conditions include interstage data.
16. The method of clause 15 wherein the interstage data includes interstage pressure drops and interstage discharge pressures.
17. The method of clause 1 wherein the proposed configuration includes indications of driver target, gear box, or one or more compression casings.
18. The method of clause 1 wherein the proposed configuration includes indications of discharge pressure, discharge temperature, and number of stages.
19. The method of clause 1 wherein the proposed configuration includes indications of actual discharge flow, power margin, and absorbed power at driver shaft.
20. A computer system for presenting data relating to selection of a compression train, comprising:
   a list projects component for managing a list of projects, each project having one or more configuration data sets that each specify a configuration data set having operating conditions for a compression train (2905);
   a new configuration component for specifying a configuration data set, for receiving a proposed configuration automatically generated based on a specified configuration data set, and for providing the proposed configuration to a user (2906); and
   a new request for configuration and quote component for specifying a configuration data set and for sending the specified configuration data set for manual determination of a proposed configuration(2907).
21. The computer system of clause 20 including a layout component for receiving from a user a layout of a proposed configuration and for displaying a representation of the layout to the user.
22. The computer system of clause 20 wherein the computer system is connected to a user computer via the Internet.
23. The computer system of clause 20 wherein the providing of the proposed configuration including sending a web page to a user computer.
24. The computer system of clause 20 wherein the lists project component allows the user to group configuration data sets into projects.
25. The computer system of clause 20 wherein the configuration data set includes environmental conditions, driver specifications, and compression data.
26. The computer system of clause 25 wherein the environmental conditions include design pressure and design temperature.
27. The computer system of clause 25 wherein the driver specification includes driver type, gas turbine data, and compressor speed.
28. The computer system of clause 25 wherein the driver specification includes fuel gas composition.
29. The computer system of clause 25 wherein the compression data includes suction pressure, discharge pressure, and suction temperature.
30. The computer system of clause 25 wherein the compression data includes process gas composition.
31. The computer system of clause 20 wherein the operating conditions include compressor options.
32. The computer system of clause 31 wherein the compressor options include casing type.
33. The computer system of clause 31 wherein the compressor options include stage compression ratios.
34. The computer system of clause 20 wherein the operating conditions include interstage data.
35. The computer system of clause 34 wherein the interstage data includes interstage pressure drops and interstage discharge pressures.
36. The computer system of clause 20 wherein the proposed configuration includes indications of driver target, gear box, or one or more compression casings.
37. The computer system of clause 20 wherein the proposed configuration includes indications of discharge pressure, discharge temperature, and number of stages.
38. The computer system of clause 20 wherein the proposed configuration includes indications of actual discharge flow, power margin, and absorbed power at driver shaft.

## Claims

1. A method in a computer system for presenting data relating to selection of a compression train, the method comprising:
receiving from a user a configuration data set that specifies operating conditions for a compression train (3101, 3103, 3104, 3105, 3106, 3107);
sending the configuration data set to the calculation engine;
receiving from the calculation engine a proposed configuration for the compression train developed based on the sent configuration data set (3107);
sending to the user a display page indicating the proposed configuration (3111); and
receiving from the user a request for a quotation for the proposed configuration (3014).

2. The method of claim 1 wherein a computer of the user is connected to the computer system via the Internet.

3. The method of claim 1 or 2 wherein the display page is a web page.

4. The method of claim 1, 2 or 3 including
receiving from the user a layout design for the proposed configuration; and
sending to the user a display page illustrating the received layout design.

5. The method of any preceding claim wherein the computer system allows the user to group configuration data sets into projects.

6. A computer system for presenting data relating to selection of a compression train, comprising:
a list projects component for managing a list of projects, each project having one or more configuration data sets that each specify a configuration data set having operating conditions for a compression train (2905);
a new configuration component for specifying a configuration data set, for receiving a proposed configuration automatically generated based on a specified configuration data set, and for providing the proposed configuration to a user (2906); and
a new request for configuration and quote component for specifying a configuration data set and for sending the specified configuration data set for manual determination of a proposed configuration(2907).

7. The computer system of claim 6 including a layout component for receiving from a user a layout of a proposed configuration and for displaying a representation of the layout to the user.

8. The computer system of claim 6 or 7 wherein the computer system is connected to a user computer via the Internet.

9. The computer system of claim 6, 7 or 8 wherein the providing of the proposed configuration includes sending a web page to a user computer.

10. The computer system of any one of claims 6 to 9 wherein the lists project component allows the user to group configuration data sets into projects.
